# FASCICULE DE BREVET EUROPEEN

(11) **EP 4 027 940 B1**
(45) Date de publication et mention de la délivrance du brevet: **05.07.2023**
(21) Numéro de dépôt: 20771271.2
(22) Date de dépôt: 09.09.2020
(51) Int. Cl.: A61D 19/00, A61D 19/02, A61D 99/00, A01N 1/02

(54) **ENSEMBLE POUR MANIPULER UNE PLURALITÉ DE PAILLETTES DE CONDITIONNEMENT DE SEMENCE ANIMALE**
ANORDNUNG ZUR HANDHABUNG VON MEHREREN TIERSAMENVERPACKUNGSHALMEN
ASSEMBLY FOR HANDLING A PLURALITY OF ANIMAL SEMEN PACKAGING STRAWS

(30) Priorité: 09.09.2019 FR 1909910
(43) Date de publication de la demande: 20.07.2022
(73) Titulaire: IMV Technologies, 61300 Saint-Ouen-sur-Iton (FR)
(72) Inventeur: SCHMITT, Eric, 53700 VILLAINES-LA-JUHEL (FR); DOUESNEL, Jean-Louis, 27160 BRETEUIL-SUR-ITON (FR); GORGES, Jean-Charles, 72610 CHENAY (FR)
(74) Mandataire: Santarelli
(86) Numéro de dépôt international: PCT/EP2020/075227
(87) Numéro de publication internationale: WO 2021/048224

(56) Documents cités:
- EP-A2- 2 450 648
- JP-U- 3 202 181

## Description

### Domaine technique de l'invention

L'invention concerne la conservation de la semence animale.

### Etat de la technique

On sait que pour certaines espèces animales, notamment les bovins et les équins, on traite la semence après prélèvement en la diluant puis la semence diluée est subdivisée en doses remplissant chacune une paillette formée par un tube mince en matière plastique et par un bouchon engagé dans ce tube, la dose de semence étant disposée entre le bouchon et l'extrémité du tube la plus éloignée du bouchon, le tronçon d'extrémité correspondant étant obturé après remplissage par écrasement et soudage.

La conservation des doses de semence contenues dans les paillettes se fait par immersion des paillettes dans un bain d'azote liquide.

Avant cette immersion, les paillettes sont congelées en étant placées dans un congélateur où circule un flux de vapeur d'azote liquide.

En pratique, pour congeler les paillettes on en dispose une pluralité sur un rack appelé rampe de congélation puis la rampe de congélation portant les paillettes est introduite dans le congélateur. En général, le congélateur est dimensionné pour recevoir plusieurs rampes de congélation superposées.

On connait déjà une telle rampe de congélation du document EP2450648 qui comporte deux parois dentées longeant un espace libre central, chaque paroi dentée présentant une denture à son sommet, les dentures des parois dentées étant identiques avec chaque creux délimité par une surface ayant une courbure selon le diamètre des paillettes.

Afin d'aider l'opérateur à disposer les paillettes sur la rampe de congélation, on connait déjà un élément de support, en général appelé calibre, qui comporte une platine et deux joues liées rigidement à la platine, laquelle a une largeur inférieure à la longueur des paillettes et comporte une surface cannelée présentant une pluralité de gorges semblables chacune orientée dans la direction de la largeur de la platine et chacune délimitée par une surface ayant une courbure selon le diamètre des paillettes, les gorges étant disposées côte à côte selon le même pas que les dentures de la rampe de congélation. L'élément de support et la rampe de congélation sont configurés pour que l'élément de support puisse s'insérer dans l'espace libre central de la rampe de congélation. Les joues sont configurées pour que l'élément de support puisse être placé sur une surface de réception horizontale avec la surface cannelée située en haut de la platine à un niveau prédéterminé au-dessus de la surface de réception. Chaque joue comporte une partie centrale ainsi qu'une première partie saillante et une seconde partie saillante s'étendant chacune d'un côté de la partie centrale, ces parties saillantes étant prévues pour recevoir la base de la rampe de congélation dont les dentures se trouvent alors sous la surface cannelée.

Dans cette position, l'opérateur place les paillettes en vrac sur la surface cannelée et les étale sur celle-ci pour que chaque paillette se loge dans une des gorges.

Comme la platine a une largeur inférieure à la longueur des paillettes, l'opérateur peut agencer les paillettes de sorte que chacune a un tronçon d'extrémité qui saille de ladite platine de chaque côté.

La rampe de congélation est alors soulevée et récupère les paillettes dont chacune présente alors de chaque côté un tronçon d'extrémité reçu dans un creux de l'une des dentures.

### Exposé de l'invention

L'invention vise à permettre à un opérateur d'effectuer de façon simple, commode et économique les manipulations des paillettes.

L'invention propose à cet effet un ensemble pour manipuler une pluralité de paillettes de conditionnement de semence animale ayant chacune un diamètre prédéterminé et une longueur prédéterminée, comportant une rampe de congélation présentant un rebord et un fond entourant un espace libre central, ledit fond comportant deux parois dentées qui s'étendent longitudinalement le long dudit espace central, chaque paroi dentée présentant une denture à son sommet comportant une succession de dents et de creux, les dentures desdites parois dentées étant identiques avec chaque creux délimité par une surface ayant une courbure selon ledit diamètre prédéterminé ; caractérisé en ce que :
- dans ladite rampe de congélation ledit fond comporte une paroi de fond en forme de cadre rectangulaire entourant l'espace libre central avec deux tronçons transversaux et deux tronçons longitudinaux, avec lesdites parois dentées qui s'étendent transversalement à la paroi de fond en bordant intérieurement lesdits tronçons longitudinaux, ledit rebord s'étendant transversalement à la paroi de fond et comportant deux parois longitudinales bordant extérieurement lesdits tronçons longitudinaux de la paroi de fond et deux parois transversales bordant extérieurement lesdits tronçons transversaux de la paroi de fond, lesdites parois longitudinales comportant chacune à leur sommet une cornière ;
- ledit ensemble comporte en outre un dispositif de transfert de paillettes comportant deux patins latéraux et un collecteur de paillettes disposé entre les deux patins latéraux, ladite rampe de congélation et ledit dispositif de transfert étant configurés pour admettre une première position extrême où ledit dispositif de transfert est disposé avec chaque patin latéral qui prend appui sur une dite cornière tandis que ledit collecteur est en surplomb d'un dit tronçon transversal de ladite paroi de fond, pour admettre une seconde position extrême où ledit dispositif de transfert est disposé avec chaque patin latéral qui prend appui sur une dite cornière tandis que ledit collecteur est en surplomb de l'autre dit tronçon transversal de ladite paroi de fond, et pour qu'en faisant glisser le dispositif de transfert de la première position extrême à la seconde position extrême avec lesdits patins qui glissent sur lesdites cornières, ladite pluralité de paillettes initialement disposée sur ladite rampe est récupérée dans ledit collecteur dudit dispositif de transfert.

Ainsi, les paillettes peuvent être particulièrement aisément ramassées de la rampe de congélation, puisqu'il suffit de placer le dispositif de transfert que comporte l'ensemble selon l'invention sur la rampe que comporte l'ensemble selon l'invention, et plus précisément sur l'un des tronçons transversaux de sa paroi de fond puis de faire glisser le dispositif de transfert le long de la rampe, vis-à-vis de laquelle il est guidé grâce à la coopération de ses patins avec les cornières de la rampe.

En outre de la commodité de manipulation des paillettes offert par l'ensemble selon l'invention, celui-ci offre l'avantage d'éviter le contact direct des paillettes congelées avec la main de l'opérateur ou avec le gant qui les recouvre, ce qui évite ou en tout cas limite considérablement les risques de choc thermique sur les paillettes et/ou sur la main de l'opérateur.

Selon des caractéristiques avantageuses :
- ledit collecteur délimite un logement débouchant sur toute sa longueur par une bouche, laquelle est tournée vers lesdites parois dentées dans ladite première position extrême, ladite rampe de congélation et ledit dispositif de transfert sont configurés pour que quand le dispositif de transfert est disposé avec chaque patin latéral qui prend appui sur une dite cornière, la surface formant la limite inférieure de la bouche est à un niveau situé entre lesdits tronçons transversaux de la paroi de fond et le fond du creux des parois dentées ;
- ledit logement est à section ronde ;
- le dispositif de transfert comporte un corps en forme de gouttière inversée et une pelle incurvée saillant d'une base dudit corps, ladite bouche étant située entre une extrémité distale de la pelle et une tranche longitudinale du corps ;
- le dispositif de transfert de paillettes comporte un corps en forme de gouttière inversée ayant deux portions d'extrémité situées longitudinalement de part et d'autre dudit collecteur, chaque dite portion d'extrémité ayant deux bases en forme de coin, chaque dit patin étant formé par lesdites deux bases en forme de coin d'une respective desdites portions d'extrémité ;
- chaque cornière comporte une aile s'étendant transversalement aux parois longitudinales et une aile inclinée s'étendant de ladite aile vers l'extérieur et vers le haut de ladite rampe de congélation ;
- ledit collecteur délimite un logement débouchant sur toute sa longueur par une bouche, laquelle est tournée vers lesdites parois dentées dans ladite première position extrême ; et le dispositif de transfert comporte des organes anti-retour disposés dans ladite bouche, configurés pour laisser les paillettes entrer dans le logement au travers de ladite bouche et pour empêcher les paillettes d'en sortir au travers de ladite bouche ;
- lesdits organes anti-retour sont des lamelles configurées pour fléchir afin de laisser les paillettes entrer dans le logement au travers de ladite bouche et pour venir en butée contre une paroi pour empêcher les paillettes d'en sortir au travers de ladite bouche ;
- ledit collecteur délimite un logement débouchant sur toute sa longueur par une bouche, laquelle est tournée vers lesdites parois dentées dans ladite première position extrême ; le dispositif de transfert comporte un flasque fermant ledit logement à une extrémité dudit dispositif de transfert, ledit logement étant ouvert à l'autre extrémité du dispositif de transfert ; et/ou
- l'ensemble comporte en outre un gobelet de stockage des paillettes, ledit collecteur du dispositif de transfert délimitant un logement à section ronde ouvert à une extrémité du dispositif de transfert, ledit gobelet ayant une ouverture ayant une section dans laquelle se loge la section dudit logement.

### Brève description des dessins

L'exposé de l'invention sera maintenant poursuivi par la description détaillée d'exemples de réalisation, donnée ci-après à titre illustratif et non limitatif, en référence aux dessins annexés, sur lesquels :
[Fig. 1] la figure 1 est une vue en coupe longitudinale d'une paillette conventionnelle remplie et obturée ;
[Fig. 2] la figure 2 est une vue en perspective d'une rampe de congélation prévue pour recevoir une pluralité de paillettes telles que celle illustrée sur la figure 1 et pour être alors placée dans un congélateur ;
[Fig. 3] la figure 3 est une vue de face de cette rampe de congélation ;
[Fig. 4] la figure 4 est une vue semblable à la figure 3 mais montrant plusieurs rampes de congélation semblables empilées les unes sur les autres ;
[Fig. 5] la figure 5 est une vue en perspective d'un élément de support prévu pour faciliter la mise en place des paillettes sur la rampe de congélation montrée sur les figures 2 et 3 ;
[Fig. 6] la figure 6 est une vue en perspective de l'élément de support et de la rampe de congélation dans une position relative de mise en place des paillettes sur la platine de l'élément de support ;
[Fig. 7] la figure 7 est une vue en élévation-coupe de la rampe de congélation et de l'élément de support dans la même position que sur la figure 6 après que des paillettes ont été mises en place sur la platine de l'élément de support ;
[Fig. 8] la figure 8 est une vue semblable à la figure 7 mais avec la rampe de congélation et l'élément de support qui sont dans une position relative d'alignement longitudinal des paillettes mises en place sur la platine de l'élément de support ;
[Fig. 9] la figure 9 est une vue en perspective de l'élément de support, de la rampe de congélation et des paillettes dans la position de la figure 8 ;
[Fig. 10] la figure 10 est une vue semblable à la figure 9 mais avec les paillettes mises en place sur la rampe de congélation, le transfert des paillettes entre l'élément de support et la rampe de congélation ayant été effectué par soulèvement de la rampe de congélation à partir de la position montrée sur les figures 8 et 9 ;
[Fig. 11] la figure 11 est une vue en élévation-coupe d'une portion de la rampe de congélation avant que les paillettes aient été mises en place ;
[Fig. 12] la figure 12 est une vue semblable à la figure 11 mais avec les paillettes mises en place ;
[Fig. 13] la figure 13 est une vue en élévation d'un dispositif de transfert pour ramasser après congélation les paillettes disposées sur la rampe ;
[Fig. 14] la figure 14 est une vue en perspective du dispositif de transfert et de la rampe de congélation sur laquelle sont disposées les paillettes, le dispositif de transfert étant dans une première position extrême ;
[Fig. 15] la figure 15 est une vue en élévation semblable à la figure 13 mais avec le dispositif de transfert placé sur la rampe de congélation comme montré sur la figure 14 ;
[Fig. 16] la figure 16 est une vue en élévation-coupe du dispositif de transfert et de la rampe de congélation dans la même position que sur la figure 14 ;
[Fig. 17] la figure 17 est une vue semblable à la figure 16 mais avec le dispositif de transfert dans une position intermédiaire sur la rampe de congélation et une partie des paillettes qui a été récupérée par le dispositif de transfert ;
[Fig. 18] la figure 18 est une vue semblable aux figures 16 et 17 mais avec le dispositif de transfert dans une seconde position extrême et toutes les paillettes qui ont été récupérées par le dispositif de transfert ;
[Fig. 19] la figure 19 est une vue en perspective du dispositif de transfert et de la rampe de congélation dans la même position que sur la figure 18 ;
[Fig. 20] la figure 20 est une vue en perspective du dispositif de transfert rempli de paillettes et d'un gobelet, le dispositif de transfert étant dans une position de basculement vers l'intérieur du gobelet ; et
[Fig. 21] la figure 21 est une vue semblable à la figure 20 mais avec le dispositif de transfert dans une position retournée au-dessus du gobelet versant les paillettes à l'intérieur du gobelet.

### Description détaillée

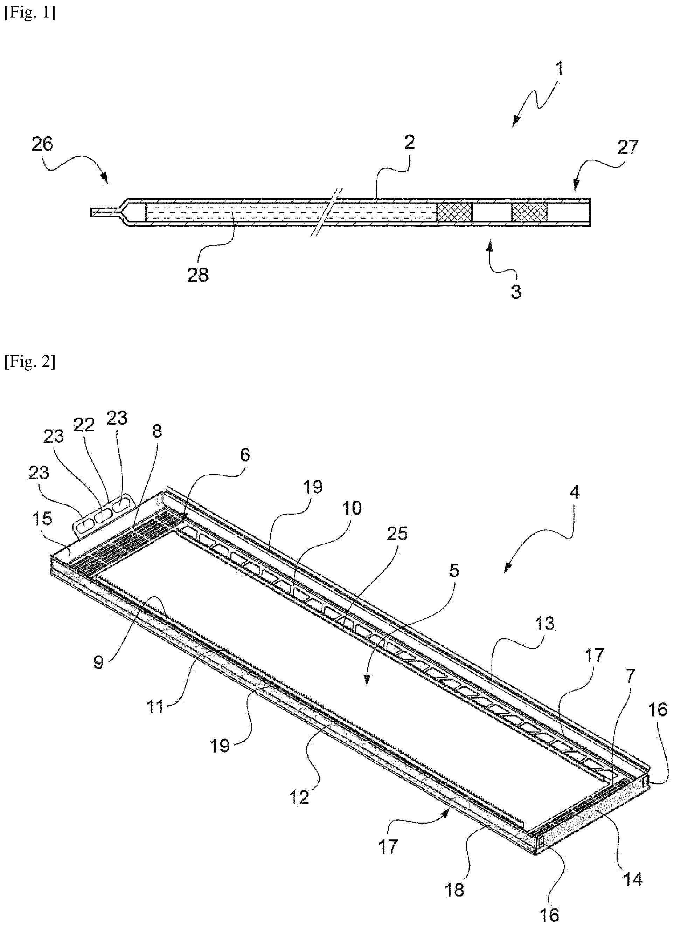

La figure 1 montre, à l'état rempli et obturé, une paillette 1 de conditionnement de semence animale formée par un tube mince 2 en matière plastique et par un bouchon 3 engagé dans le tube 2, la paillette 1 contenant une dose 28 de semence animale diluée, ici de la semence de taureau, disposée entre le bouchon 3 et un tronçon d'extrémité 26 obturé par écrasement et soudage.

Le tronçon d'extrémité 26 est le plus éloigné du bouchon 3. Le tronçon d'extrémité 27, qui est le plus proche du bouchon, n'est ici pas obturé (de ce côté, c'est le bouchon 3 qui retient la dose 28 de semence).

La paillette 1, et plus précisément le tube 2, a une longueur de l'ordre de 133 mm et un diamètre interne qui est de l'ordre de 1,6 mm avec une épaisseur de paroi de l'ordre de 0,175 mm de sorte que le diamètre de la paillette 1, et plus précisément le diamètre externe du tube 2, est de l'ordre de 1,95 mm.

En pratique, vu les tolérances de fabrication, le diamètre externe du tube 2 de la paillette 1 est compris entre 1,90 et 2 mm et sa longueur est comprise entre 132 et 134 mm.

La dose de semence 28 contenue dans la paillette 1 est une dose de semence fraiche qu'il est prévu de conserver par immersion de la paillette 1 dans un bain d'azote liquide.

Avant cette immersion, il convient de congeler la paillette 1 en la plaçant dans un congélateur où circule un flux de vapeur d'azote liquide.

En pratique, on dispose une pluralité de paillettes 1 sur un rack appelé rampe de congélation puis la rampe de congélation portant les paillettes est introduite dans le congélateur. En général, le congélateur est dimensionné pour recevoir plusieurs rampes de congélation superposées.

Les figures 2 à 4 montrent une rampe de congélation spécialement conçue pour coopérer avec des accessoires prévus pour faciliter la manipulation des paillettes.

Ici, la rampe de congélation 4 est faite à partir d'une tôle métallique découpée et pliée.

La rampe de congélation 4 a la forme générale d'un plateau présentant un rebord et un fond entourant un espace libre central 5.

Le fond comporte une paroi de fond 6 en forme de cadre rectangulaire entourant l'espace libre central 5. La paroi de fond 6 est ajourée de manière à permettre la circulation de la vapeur d'azote liquide dans le congélateur.

La paroi de fond 6 comporte deux tronçons transversaux 7 et 8 et deux tronçons longitudinaux 9 et 10. Les tronçons transversaux 7, 8 sont en regard l'un de l'autre et relient les tronçons longitudinaux 9, 10 en regard l'un de l'autre.

Dans le fond de la rampe de congélation 4, les tronçons longitudinaux 9, 10 sont bordés intérieurement chacun par une paroi dentée 11, 25 s'étendant transversalement à la paroi de fond 6.

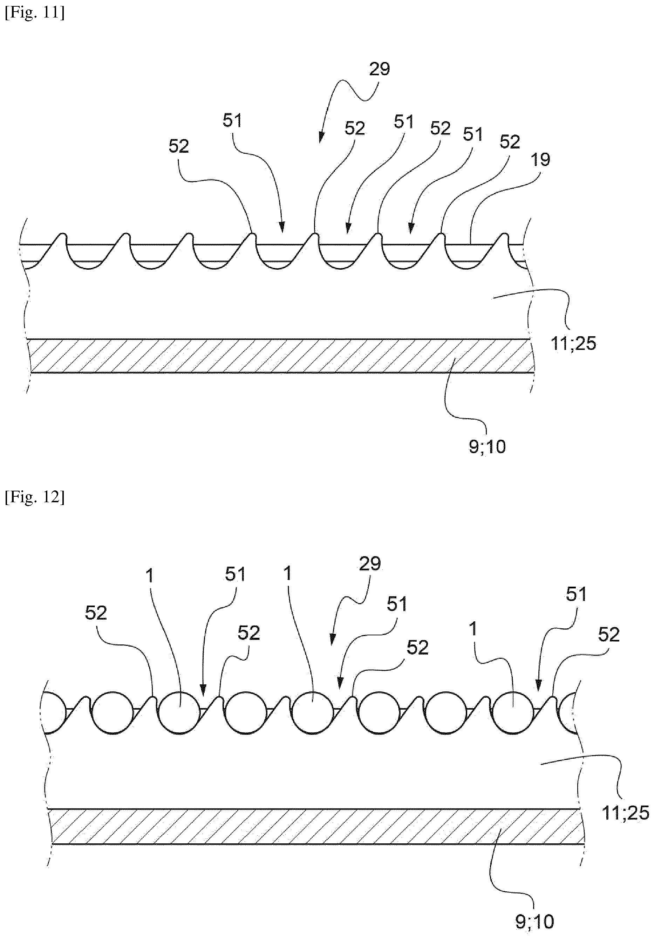

Le sommet de chacune des parois dentées 11, 25 présente une denture 29 comportant une succession de dents 52 et de creux 51, chaque creux 51 étant configuré pour loger un tronçon d'extrémité 26, 27 d'une paillette 1, comme illustré sur les figures 11 et 12.

Chaque creux 51 de la denture 29 de la paroi dentée 11 est en regard d'un creux 51 de la denture 29 de la paroi dentée 25 et chaque creux 51 est délimité par une surface ayant une courbure selon le diamètre des paillettes. Le pas de la denture 29 de la paroi dentée 11 est identique au pas de la denture 29 de la paroi dentée 25.

Ainsi, chaque creux 51 de la denture 29 de la paroi dentée 11 permet de loger un tronçon d'extrémité 26 et chaque creux 51 en regard de la paroi dentée 25 permet de loger un tronçon d'extrémité 27.

Le rebord de la rampe de congélation 4 comporte deux parois longitudinales 12, 13 disposées en regard l'une de l'autre, reliées par deux parois transversales 14 et 15 en regard l'une de l'autre. Les parois transversales 14, 15 s'étendent depuis les tronçons transversaux 7, 8 de la paroi de fond 6 et les parois longitudinales 12 et 13 s'étendent depuis les tronçons longitudinaux 9 et 10 de la paroi de fond 6.

Les parois transversales 14, 15 et les parois longitudinales 12, 13 s'étendent transversalement à la paroi de fond 6 de la rampe de congélation 4.

De plus, une portion de paroi 16 saille de part et d'autre de chacune des parois longitudinales 12, 13. Ces portions de parois 16 sont pliées vers les parois transversales 14, 15, puis soudées à ces parois, afin de maintenir en position les parois longitudinales 12, 13 contre les parois transversales 14, 15 permettant alors de rigidifier la rampe de congélation 4.

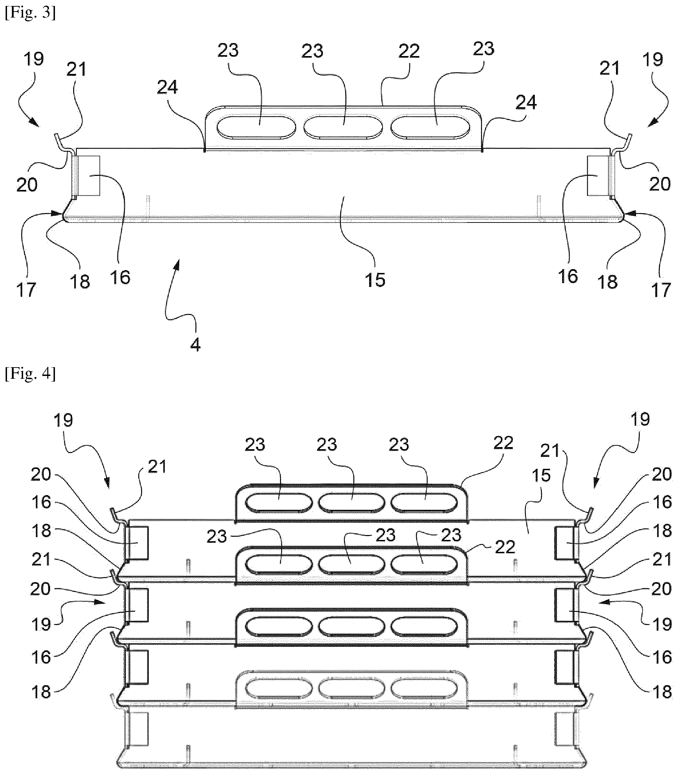

Comme on le voit bien sur la figure 3, la base 17 des parois longitudinales 13, 14, reliée aux tronçons longitudinaux 9, 10, forme un renflement 18.

Une cornière 19 saille de chaque paroi longitudinale 12, 13. Chaque cornière 19 comporte une aile 20 s'étendant transversalement aux parois longitudinales 12, 13 ainsi qu'une aile 21 inclinée s'étendant de l'aile 20 vers l'extérieur et vers le haut de la rampe de congélation 4.

La rampe de congélation 4 est empilable avec une autre rampe de congélation semblable, tel que cela est illustré à la figure 4. Chaque renflement 18 d'une rampe de congélation disposée au-dessus d'une autre rampe de congélation est alors logé dans la cornière 19 correspondante de l'autre rampe de congélation disposée en-dessous.

Plus précisément, chaque renflement 18 de la rampe de congélation prend appui sur l'aile 20 de la rampe de congélation du dessous et entre en butée contre l'aile 21.

Lors de l'empilement de plusieurs rampes de congélation 4, les cornières 19 d'une rampe permettent le maintien latéral de la rampe disposée au-dessus.

Au surplus, la rampe de congélation 4 est pourvue de deux pattes de préhension 22 émergeants chacune d'une paroi transversale 14, 15, vers l'extérieur et vers le haut de la rampe de congélation 4. Les pattes de préhension 22 sont chacune pourvues de trous 23 permettant à l'utilisateur de manipuler la rampe de congélation 4 en limitant les risques de glissement des doigts vis-à-vis des pattes 22.

Chaque patte de préhension 22 est disposée à équidistance des parois longitudinales 12, 13.

Lors de l'empilement d'une rampe de congélation 4 sur une autre rampe de congélation similaire, chaque patte de préhension 22 de la rampe du dessous maintient la rampe du dessus suivant la direction longitudinale.

En outre, des fentes 24 sont ménagées dans les parois transversales 14, 15 de part et d'autre de chacune des pattes de préhension 22.

Comme indiqué ci-dessus, la rampe de congélation 4 a été spécialement conçue pour coopérer avec des accessoires prévus pour faciliter la manipulation des paillettes.

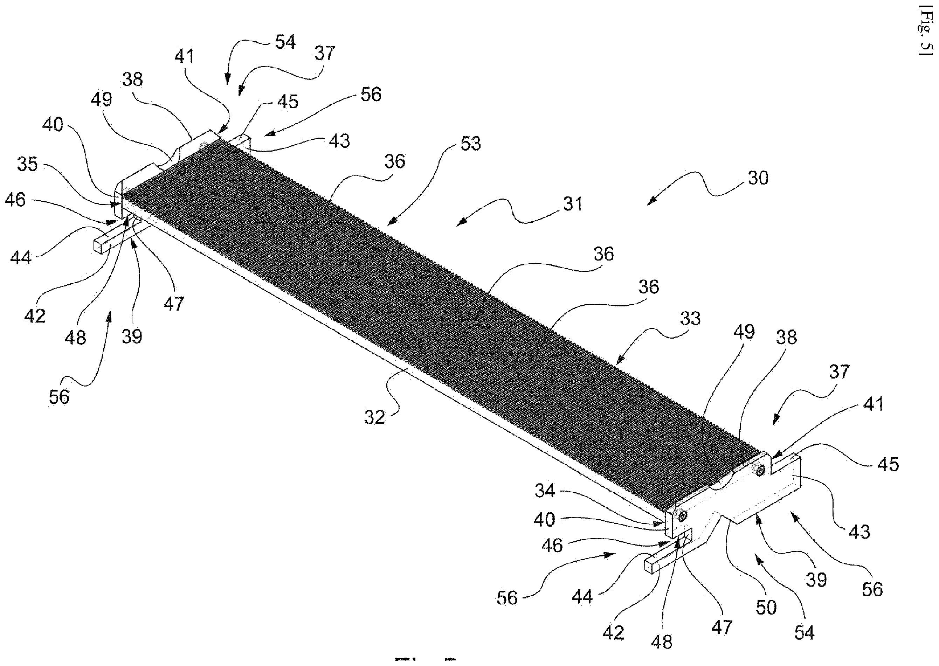

On va maintenant décrire un accessoire pour faciliter la mise en place de la pluralité de paillettes 1 sur la rampe de congélation 4, à savoir un élément de support 30 montré sur la figure 5.

L'élément de support 30 est configuré pour être posé sur une surface de réception horizontale telle qu'une table par exemple.

L'élément de support 30 présente une platine 31 et deux joues 37.

La platine 31 est à contour rectangulaire. Elle est délimitée par deux faces longitudinales 32, 33, deux faces transversales 34, 35, une face supérieure et une face inférieure.

La face supérieure de la platine 31 forme une surface cannelée 53 présentant une pluralité de gorges 36 semblables ménagées côte à côte selon un pas prédéterminé.

Chaque gorge 36 est configurée pour recevoir une paillette 1 du fait qu'elle est délimitée par une surface ayant une courbure selon le diamètre d'une paillette 1.

Chaque gorge 36 est orientée suivant la direction de la largeur de la platine 31, c'est-à-dire suivant la direction transversale.

Les gorges 36 sont disposées sur toute la largeur de la face supérieure de la platine 31, c'est-à-dire de la face longitudinale 32 à la face longitudinale 33.

Dans l'exemple illustré, la platine 31 comporte cent soixante-quinze gorges 6 et peut donc accueillir cent soixante-quinze paillettes 1.

D'une façon générale, il est avantageux que la platine 31 comporte entre soixante-dix et deux cent cinq gorges semblables configurées pour loger le même nombre de paillettes 1.

La platine 31 a une largeur inférieure à la longueur des paillettes 1, à savoir 133 mm, de sorte que quand une paillette 1 est placée centrée ou à peu près dans une gorge 36, ses tronçons d'extrémités 26 et 27 dépassent de part et d'autre de la platine 31.

D'une façon générale, il est avantageux que la platine 31 ait une largeur comprise entre 80 et 90 mm.

Les joues 37 de l'élément de support 30 sont identiques.

Elles sont liées rigidement à la platine 31, ici à chaque extrémité transversale. La liaison rigide est effectuée ici par vissage.

Chaque joue 37 comporte une partie centrale 54 et deux parties saillantes 56.

La partie centrale 54 est de forme générale rectangulaire et est délimitée par une surface supérieure 38, une surface inférieure 39 et deux surfaces latérales 40 et 41.

La largeur de cette partie centrale 54, c'est-à-dire la distance entre les deux surfaces latérales 40, 41 correspond à la largeur de la platine 31.

La surface inférieure 39 de chacune des joues 37 prend appui sur la surface de réception telle qu'une table. La fixation de chacune des joues 37 sur la platine 31 est faite au voisinage de la surface supérieure 38 de chaque joue 37.

Ainsi, la platine 31 s'étend au-dessus et parallèlement à la surface de réception horizontale sur laquelle repose les joues 37 de l'élément de support 30.

La platine 31 et la partie centrale 54 de chacune des joues 37 sont configurées pour se loger dans l'espace libre central 5 de la rampe de congélation 4, entre les parois dentées 11 et 25. Les parties saillantes 56 s'étendent de part et d'autre de la partie centrale 54 des joues 37. Plus précisément, chaque partie saillante 56 émerge d'une des surfaces latérales 40, 41.

La première partie saillante 56 comporte une patte 42 en débord de la surface latérale 40 à la base de la joue 37, avec ici la face inférieure de la patte 42 qui fait partie de la surface inférieure 39 de la joue 37.

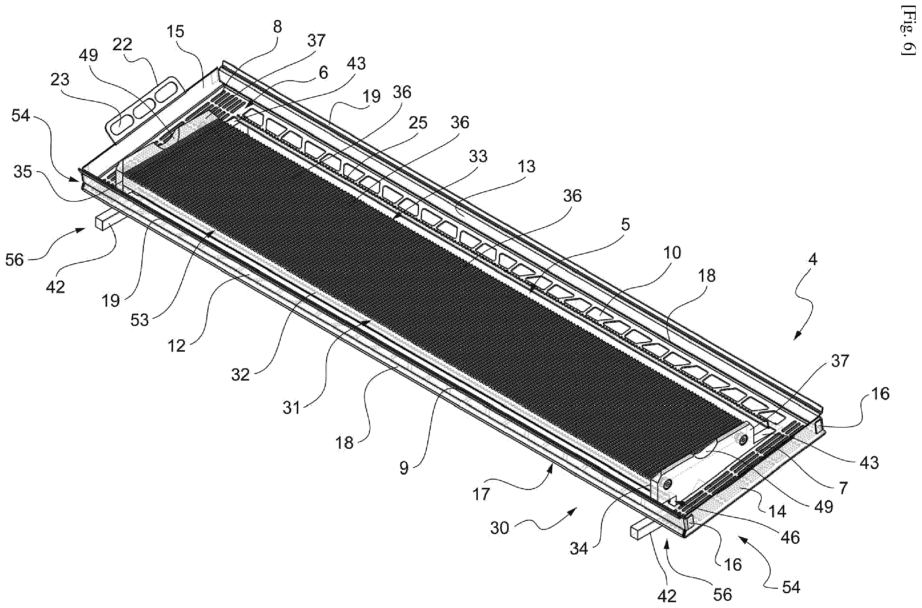

La face supérieure de la patte 42 forme une face d'appui 44 prévue pour recevoir l'une des zones de la rampe de congélation 4 située à la jonction de la paroi de fond 6 et du rebord, en l'occurrence le renflement 18 en regard de la paroi dentée 11, comme on le voit sur les figures 6 à 8.

La seconde partie saillante 56 comporte une patte 43 en débord de la surface latérale 41, à la base de la joue 37 avec ici la face inférieure de la patte 43 qui fait partie de la surface inférieure 39 de la joue 37.

La face supérieure de la patte 43 forme une face d'appui 45 prévue pour recevoir l'une des zones de la rampe de congélation 4 située à la jonction de la paroi de fond 6 et de l'une des parois dentées 11, 25, ici la paroi dentée 25, comme on le voit sur les figures 6 à 8.

Suivant la direction de la hauteur, la face d'appui 44 de chaque patte 42 est plus éloignée de la platine 31 que la face d'appui 45 de chaque patte 43. Ainsi, lorsqu'elle est mise en place sur l'élément de support 30, la rampe de congélation 4 est inclinée.

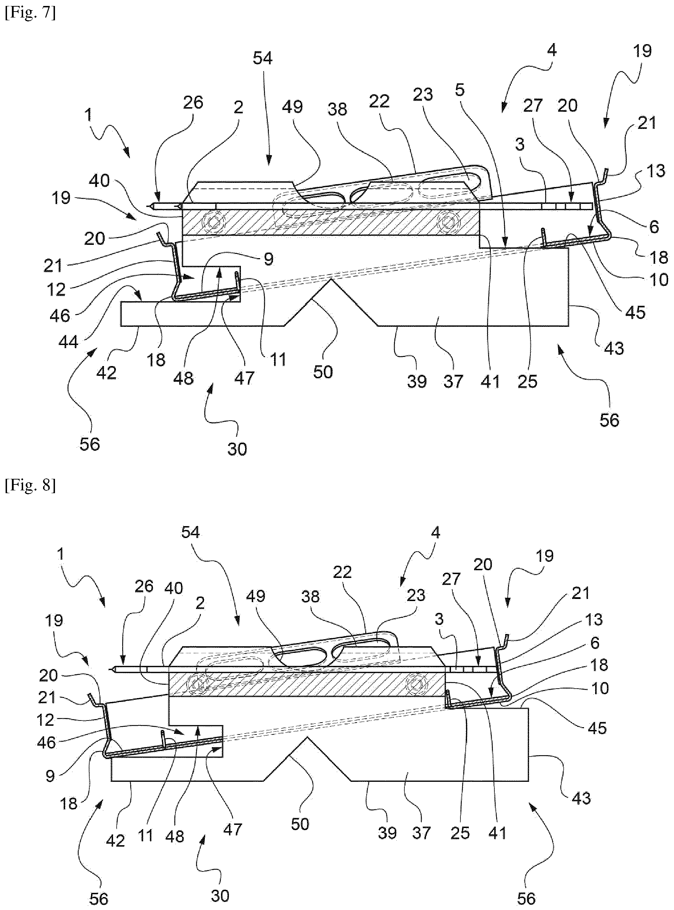

Cette inclinaison est telle (voir les figures 7 et 8) que la paroi longitudinale 13 est au même niveau que la surface supérieure de la platine 31 alors que la paroi longitudinale 12 est en-dessous de la surface supérieure de la platine 31.

Une encoche 46 est ménagée dans chaque joue 37 en retrait de la surface latérale 40.

L'encoche 46 est délimitée par une face d'appui située dans le prolongement de la face d'appui 44 de la patte 42, une face de fond 47 et une face supérieure 48. Pour chaque joue 37, la face supérieure 48 est en regard de la face d'appui 44 et la face de fond est transversale à la face d'appui 44 et à la face supérieure 48.

Chaque encoche 46 est configurée pour loger un des tronçons longitudinaux 9 ou 10 (le tronçon 9 sur les figures 5 à 9) et la paroi dentée 11 ou 25 (la paroi dentée 11 sur les figures 5 à 9).

La profondeur de l'encoche 46 est prédéterminée et correspond ici à la distance entre la paroi dentée 11 et la paroi longitudinale 12 ainsi qu'à la distance entre la paroi dentée 25 et la paroi longitudinale 13 (ici les distances entre les parois dentées 11, 25 et respectivement les parois longitudinales 12, 13 sont égales).

Dans la position relative de mise en place des paillettes 1 sur la platine 31 montrée sur les figure 6 et 7, la rampe de congélation 4 est reçue sur l'élément de support 30 avec la paroi dentée 11 en butée contre la face de fond 47 de l'encoche 46.

Dans cette position, selon la direction transversale (direction de la largeur) de la platine 31, la paroi longitudinale 13 est à distance de la platine 31 tandis que la paroi longitudinale 12 en est proche mais comme elle est située en-dessous de la surface supérieure de la platine 31, elle ne gêne pas l'accès à cette surface supérieure, qui est plus généralement facile d'accès puisque la paroi latérale 13 est à distance de la platine 31.

L'utilisateur peut alors aisément étaler la pluralité de paillettes 1 sur la surface supérieure cannelée 53 de la platine 31, en veillant à centrer grossièrement les paillettes par rapport à la platine 31.

On observera que dans la position relative de mise en place des paillettes 1 sur la platine 31 montrée sur les figure 6 et 7, la distance entre la surface latérale 41 et la paroi dentée 25 est plus grande que la profondeur de l'encoche 46.

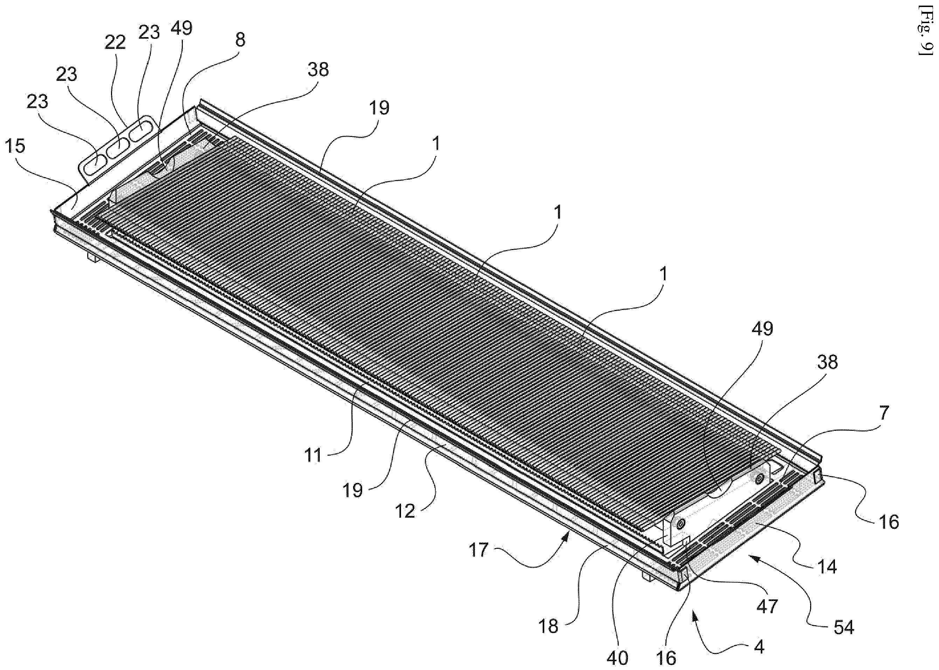

Par conséquent si l'on fait glisser la rampe de congélation 4 sur les faces d'appui 44 et 45 dans le sens qui fait sortir la paroi dentée 11 de l'encoche 46 (vers la gauche sur la figure 7), la paroi dentée 11 est hors de l'encoche 46 lorsque la paroi dentée 25 vient contre la surface latérale 41, ainsi que montré sur les figures 8 et 9.

On est alors dans une position d'alignement longitudinal des paillettes, par venue en contact de celles-ci contre la paroi longitudinale 13.

Pour une partie des paillettes, cet alignement est effectué lors du mouvement de la rampe de congélation 4 depuis la position relative de mise en place des paillettes, puisque lors de ce mouvement la paroi longitudinale 13 est venue au contact des paillettes qui dépassaient trop de son côté puis est restée en contact avec elles en les poussant. Pour les autres paillettes (celles qui dépassent trop du côté opposé à la paroi longitudinale 13), l'utilisateur les pousse à la main pour qu'elles viennent aussi contre la paroi 13. Toutes les paillettes sont alors alignées, puisqu'elles ont chacune une extrémité le long de la paroi 13, ainsi qu'on le voit bien sur la figure 9.

La paroi dentée 11, qui est hors de l'encoche 46, est en regard des tronçons d'extrémité 26 des paillettes 1 tandis que la paroi dentée 25 est en regard de leurs tronçons d'extrémité 27.

Plus précisément, la rampe de congélation 4 et l'élément de support 30 sont configurés, en particulier du fait que le pas de la denture 29 des parois 11 et 25 est le même que le pas de la surface cannelée 53 de l'élément de support 30, pour que chaque creux 51 de la denture 29 de la paroi dentée 11 soit en regard du tronçon d'extrémité 26 d'une paillette 1 et que chaque creux 51 de la denture 29 de la paroi dentée 25 soit en regard du tronçon d'extrémité 27 d'une paillette 1.

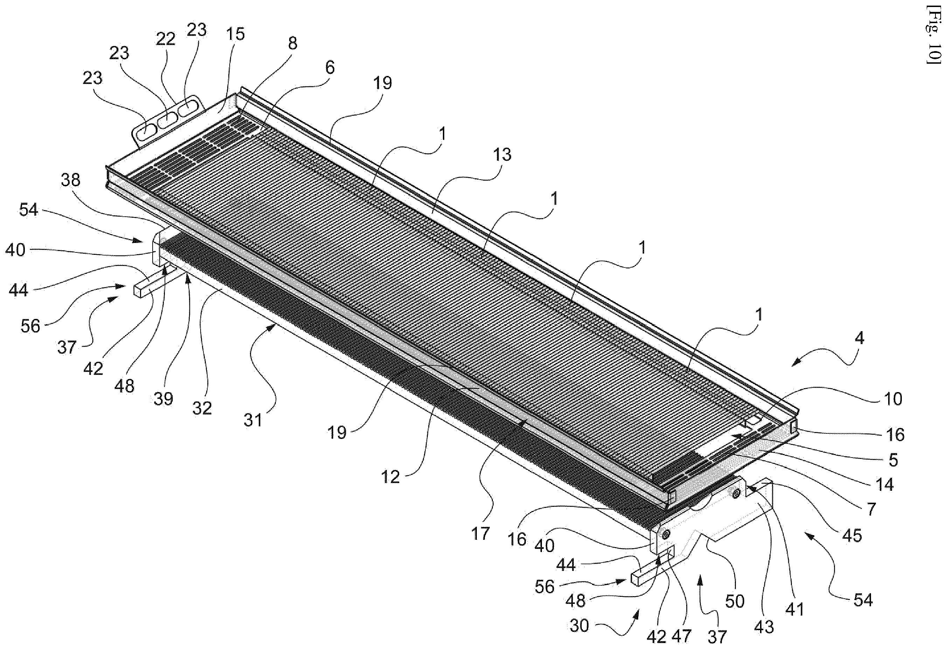

Ainsi, il suffit à l'utilisateur de soulever la rampe de congélation 4 pour que chaque tronçon d'extrémité 26, 27 des paillettes se loge dans un creux 51 de denture 29 des parois dentées 11, 25, les paillettes 1 étant ainsi mises en place sur la rampe de congélation 4, ainsi qu'on le voit sur la figure 10.

La figure 10 montre une portion de paroi dentée 11, 25 avant le soulèvement de la rampe 4, lorsque les paillettes 1 sont disposées sur la platine 31 et la figure 11 montre cette même portion de paroi dentée 11, 25 après le soulèvement de la rampe 4, lorsque les paillettes 1 sont mises en place dans la denture 29.

On notera que pour simplifier les dessins, seule l'une des pattes de préhension 22 de la rampe 4 est illustrée sur les figures 9 et 10.

On observera que chaque joue 37 comporte ici une alvéole 49 ménagée dans la surface supérieure 38 jusqu'à la platine 31. Chacune de ces alvéoles 49 présente une longueur et une largeur permettant d'y insérer le doigt d'une main d'adulte.

Chaque alvéole 49, disposée à mi-distance des faces longitudinales 32, 33 de la platine 31, facilite l'étalage de la pluralité de paillettes 1 sur la surface cannelée 53 de la platine 31 puisqu'elle permet à l'utilisateur d'y disposer son doigt lorsqu'il dépose en vrac la pluralité de paillettes dans la pluralité de gorges 36 de la platine 31 au voisinage de chaque joue 37.

Chacune des joues 37 comporte également une cavité 50 ménagée dans la surface inférieure 39 à mi-distance de chacune des faces longitudinales 32, 33, de la platine 31. Chaque cavité 50 présente une longueur et une largeur permettant d'y insérer le doigt d'une main d'adulte.

L'utilisateur peut transporter l'élément de support par pincement des joues 37, en disposant un doigt dans chaque alvéole 49 et un autre doigt dans chaque cavité 50.

On va maintenant récapituler les actions effectuées par l'utilisateur pour mettre en place les paillettes 1 sur la rampe de congélation 4.

Tout d'abord, la rampe de congélation 4 est disposée sur l'élément de support 30.

Plus précisément, la platine 31 et la partie centrale de chacune des joues 37 sont insérées dans l'espace libre central 5 de la rampe de congélation 4, avec l'élément de support 30 et la rampe de congélation 4 disposés dans la position de mise en place des paillettes 1 sur la platine 31 (figures 6 et 7).

L'utilisateur place ensuite sur la surface cannelée 53 de la platine 31 la pluralité de paillettes en vrac. En les étalant sur la surface, chaque paillette 1 s'insère dans une gorge 36 de la platine 31, l'utilisateur veillant à centrer grossièrement les paillettes 1 vis-à-vis de la platine 31.

Une fois les paillettes 1 placées dans les gorges 36, l'utilisateur translate la rampe 4 de sorte à ce qu'elle soit en position d'alignement longitudinal des paillettes (figures 8 et 9).

L'utilisateur saisit alors les pattes de préhension 22 pour soulever la rampe de congélation 4. Les paillettes sont alors mises en place sur la rampe de congélation 4 (figure 10).

On notera que sur les figures 6 à 10 c'est la paroi dentée 11 qui est du côté de l'encoche 46 mais que cela aurait pu être la paroi dentée 25, la partie de la rampe de congélation 4 située d'un côté d'un plan médian longitudinal orienté verticalement étant l'image miroir de la partie située de l'autre côté.

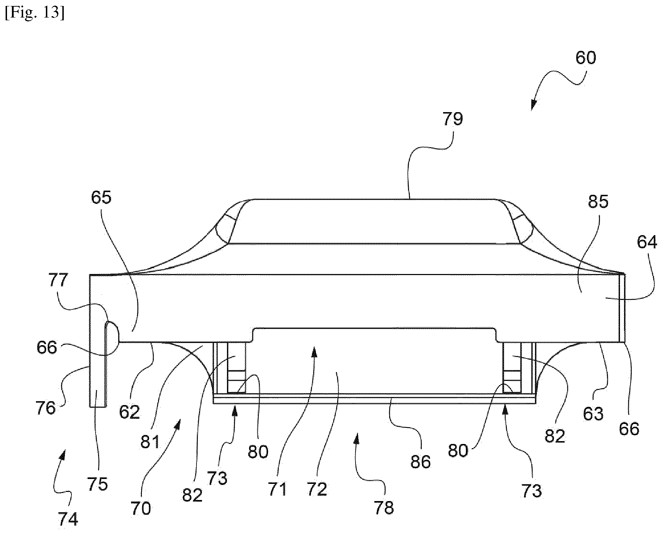

On va maintenant décrire un accessoire pour faciliter le transfert des paillettes 1 de la rampe de congélation 4 vers un gobelet 55, à savoir un dispositif de transfert 60 montré sur la figure 13.

Le dispositif de transfert 60 comporte un corps 61.

Le corps 61 a la forme générale d'une gouttière inversée. Il est délimité par une face interne 84 et une face externe 85 et comporte deux tranches 62, 63, une première portion d'extrémité 64 et une seconde portion d'extrémité 65.

Les tranches 62, 63 s'étendent longitudinalement de la première portion d'extrémité 64 à la seconde portion d'extrémité 65.

Chaque portion d'extrémité 64, 65 comporte deux bases 66 en forme de coin 66.

Les coins 66 de chaque portion d'extrémité 64, 65 forment un patin latéral 67.

Les patins latéraux 67 sont configurés pour prendre appui sur la cornière 19. Cette cornière 19 est formée par l'aile 20 et l'aile 21 inclinée.

La longueur du corps 61 du dispositif de transfert 60 correspond à la distance entre les cornières 19 de chacune des parois longitudinales 12, 13 de la rampe de congélation 4. La largeur du corps 61, c'est-à-dire l'espacement entre chacune des tranches 62, 63 correspond à la largeur des tronçons transversaux 7, 8 de la rampe 4, à savoir la distance entre la paroi transversale 14 (respectivement 15) et l'une des extrémités des parois dentées 11 et 25. Le corps 61 est configuré pour recevoir toutes les paillettes disposées sur la rampe 4, à savoir entre soixante-dix et deux cent cinq paillettes (cent soixante-quinze paillettes dans l'exemple illustré).

Le dispositif de transfert 60 comporte en outre un collecteur 70.

Le collecteur 70 est disposé entre les deux patins latéraux 67 et il comporte une pelle 72.

La pelle 72 saille d'une base du corps 61 de manière incurvée vers la tranche 63. La pelle 72 comporte une surface interne 81 disposée en regard de la face interne 84 du corps 61.

La pelle 72 est configurée pour se loger dans l'espace libre central 5 de la rampe de congélation 4.

Le collecteur 70 délimite un logement 71. Plus particulièrement, le logement 71 est de section ronde et il est délimité par la face interne 84 du corps 61 et par la surface interne 81 de la pelle 72.

Le logement 71 est débouchant sur toute sa longueur par une bouche 78.

La bouche 78 est configurée pour permettre l'insertion des paillettes 1 dans le logement 71. La longueur de la bouche 78 est donc supérieure à la longueur des paillettes 1, à savoir plus de 133 mm.

Plus particulièrement, la bouche 78 est située entre une extrémité distale 86 de la pelle 72 et la tranche 63 du corps 61.

Le dispositif de transfert 60 des paillettes 1 comporte en outre des organes anti-retour 73. Ici, deux organes anti-retour 73 s'étendent de manière incurvée dans la bouche 78 de la tranche 63 vers la surface interne 81.

Les organes anti-retour 73 sont configurés pour laisser les paillettes 1 entrer dans le logement 71 au travers de la bouche 78 et pour empêcher les paillettes 1 de sortir du logement 71 au travers de la bouche 78.

Les organes anti-retour 73 sont des lamelles dont la portion d'extrémité libre 80 peut prendre appui sur la surface interne 81 de la pelle 72.

Ces lamelles présentent chacune une surface externe 82 et une surface interne 83. La surface externe 82 est configurée pour être en contact avec les paillettes disposées sur les parois dentées 11, 25 de la rampe 4, alors que la surface interne 83 est configurée pour être en contact avec les paillettes ramassées, disposées dans le collecteur 70.

Les lamelles formant les organes anti-retour 73 sont dans une matière flexible permettant le fléchissement de ces lamelles au contact des paillettes 1 disposées sur la rampe 4. Ici, pour une épaisseur de l'ordre de 0,4 mm, les lamelles présentent une dureté de l'ordre de 95 shore A.

Lorsque les paillettes 1 entrent en contact avec leur surface externe 82, les organes anti-retour 73 fléchissent, de sorte que leur portion d'extrémité libre 80 se soulève de la pelle 72, créant alors un espace entre la pelle 72 et les organes anti-retour 73 permettant le passage des paillettes 1 dans le logement 71.

Après le passage d'une paillette 1, la lamelle revient au contact de la surface 81, empêchant la sortie des paillettes du logement 71.

Le dispositif de transfert 60 est pourvu d'un flasque 74.

Le flasque 74 a une forme générale ronde et s'étend de la portion d'extrémité 65, transversalement au corps 61.

Le flasque 74 est formé d'un fond 76 et d'une bordure 75 longeant la périphérie du fond 76. Le flasque 74 est coaxial au logement 71.

Le flasque 74 ferme le logement 71 à une extrémité, ici l'extrémité au voisinage de la portion d'extrémité 65, le logement 71 étant ouvert à l'autre extrémité.

Une encoche 77 est ménagée dans le corps 61, entre la bordure 75 du flasque 74 et la portion d'extrémité 65. L'encoche 77 est configurée pour logée l'aile inclinée 21 de la cornière 19. Ainsi, lorsque le dispositif de transfert 60 est disposé sur la rampe de congélation 4, l'encoche 77 loge l'aile inclinée 21 et le flasque 74 est disposé extérieurement à la première paroi longitudinale 12.

Le dispositif de transfert 60 de paillettes 1 est pourvu d'une poignée 79 saillant du corps 61. La poignée 79 permet à l'utilisateur de manipuler le dispositif de transfert 60. Elle est disposée à équidistance des portions d'extrémité 64, 65 et des tranches 62, 63 et s'étend vers le haut et vers l'extérieur de la rampe de congélation 4, lorsque le dispositif de transfert 60 est mis en position sur la rampe 4.

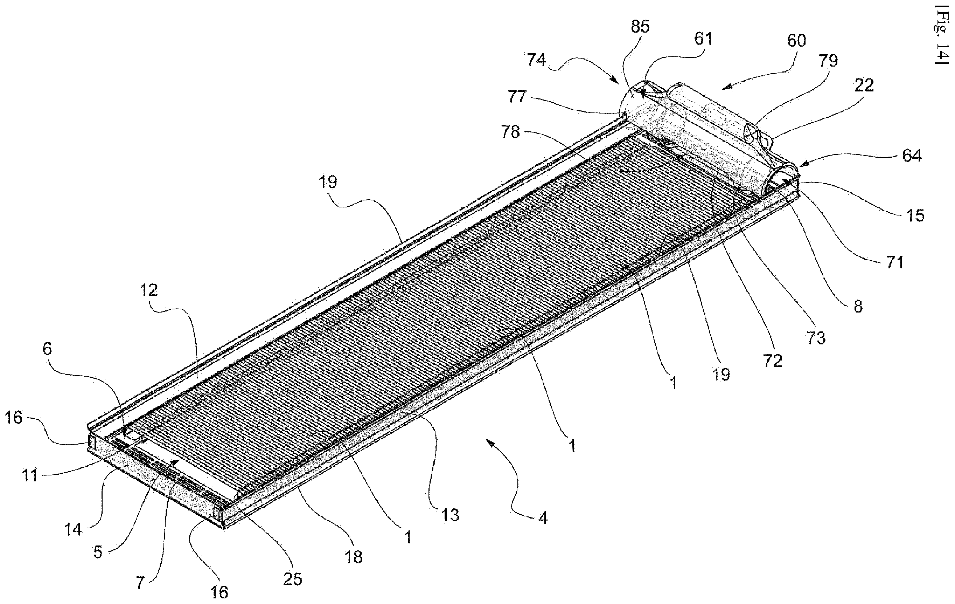

La rampe 4 et le dispositif de transfert 60 sont configurés pour admettre une première position extrême du dispositif de transfert 60 des paillettes 1 sur la rampe de congélation 4 montrée sur les figures 14 à 16.

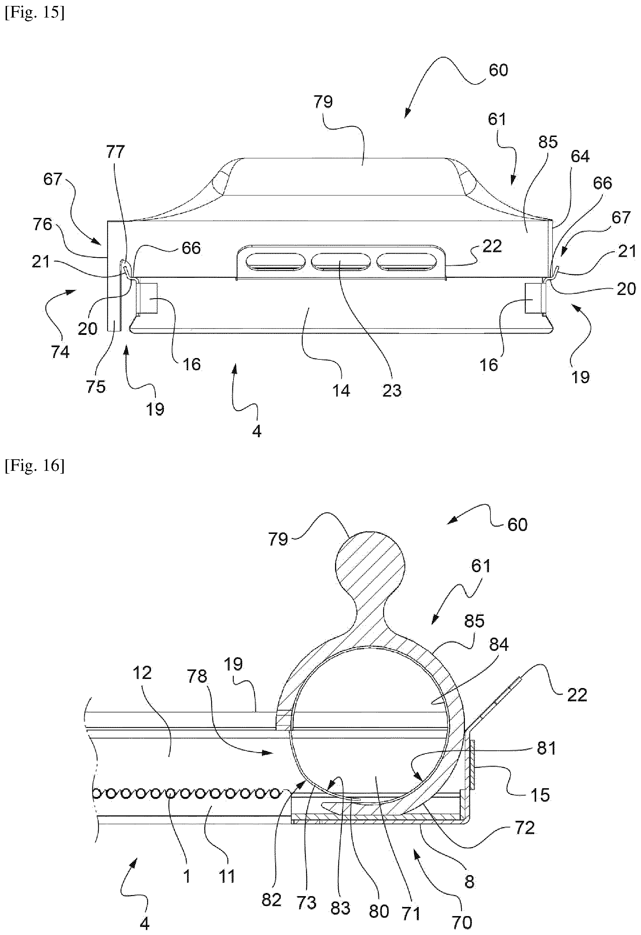

Dans la première position extrême, le dispositif de transfert 60 est reçu par la rampe de congélation 4 avec chaque patin latéral 67 qui prend appui sur une cornière 19 de la rampe 4 (figure 15) et la surface formant la limite inférieure de la bouche 78 est à un niveau situé entre les tronçons transversaux 7, 8 et le fond du creux 51 des parois dentées 11, 25 (figure 16).

Dans cette position, le collecteur 70 est en surplomb d'un des tronçons transversaux 7, 8, ici du second tronçon transversal 8. Le corps 61 prend appui contre la paroi transversale 14, 15 correspondant au tronçon transversal, ici la paroi 15, de telle sorte que la bouche 78 soit tournée vers les parois dentées 11, 25 et donc vers les paillettes 1.

En faisant glisser le dispositif de transfert 60 sur la rampe de congélation 4, les patins 67 glissant dans les cornières 19, les organes anti-retour 73 disposés entre les parois dentées 11, 25 vont entrer en contact avec les paillettes 1 mises en place dans les creux 51 des parois dentées 11, 25.

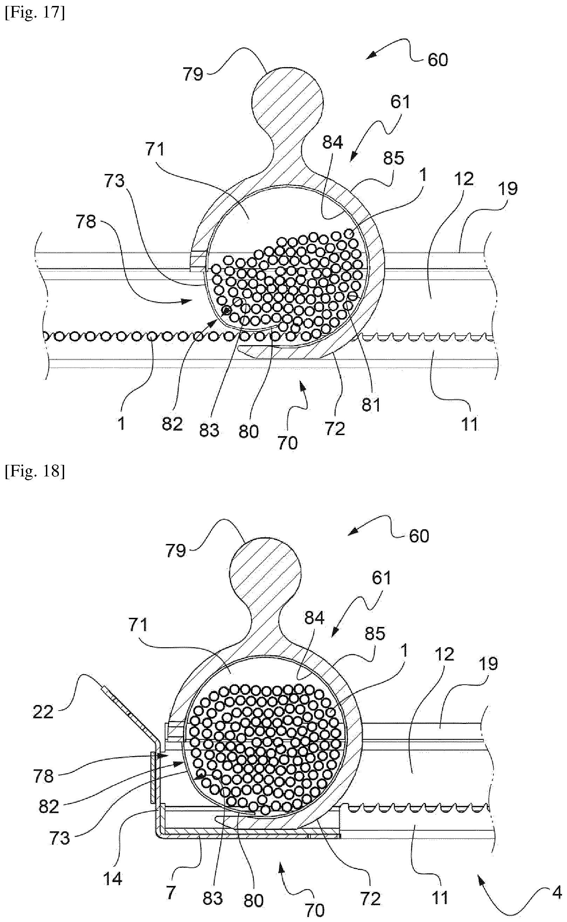

Tel qu'illustré sur la figure 17, au contact des paillettes 1, les organes anti-retour 73 fléchissent vers l'intérieur du logement 71, laissant un espace entre la pelle 72 et la portion d'extrémité libre 80 des organes anti-retour 73. Les paillettes 1 s'insèrent alors dans cet espace et entrent en contact avec la pelle 72. Les paillettes 1 encore disposées dans l'espace poussent les paillettes 1 déjà dans le logement 71 et la forme incurvée de la pelle 72 permet leur guidage vers le centre du logement 71. Cette forme incurvée permet donc une bonne circulation des paillettes 1 dans le logement 71 et une insertion efficace des paillettes 1. Une fois dans le logement 71, les paillettes 1 ne peuvent en ressortir car la bouche 78 à travers laquelle elles sont passées pour y entrer est obturée par les organes anti-retour 73. Cette obturation est rendue possible par la forme incurvée vers le logement 71 des organes anti-retour 73 et par leur portion d'extrémité libre 80 prenant appui sur la surface interne 81 de la pelle 72 lorsque ces organes sont sollicités vers l'extérieur.

En fin de course, toutes les paillettes 1 disposées sur la rampe 4 ont été transférées dans le logement 71, la rampe 4 et le dispositif de transfert 60 étant dans une seconde position extrême.

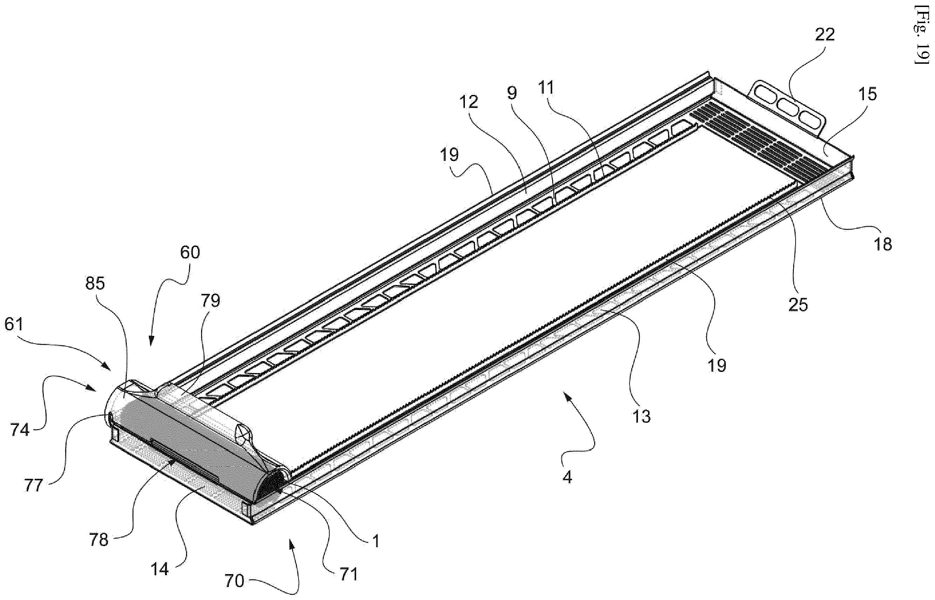

La seconde position extrême est illustrée sur les figures 18 et 19.

Dans cette position, les patins 67 prennent encore appui sur les cornières 19, tandis que le collecteur 70 est en surplomb du tronçon transversal opposé à celui de la première position extrême, ici le tronçon 7. Le corps 61 prend appui contre une paroi transversale 14, 15, ici la paroi 14, de sorte que la bouche 78 est tournée vers cette paroi 14.

Ainsi, il suffit à l'utilisateur de soulever par la poignée 79 le dispositif de transfert 60 pour l'ôter de la rampe 4.

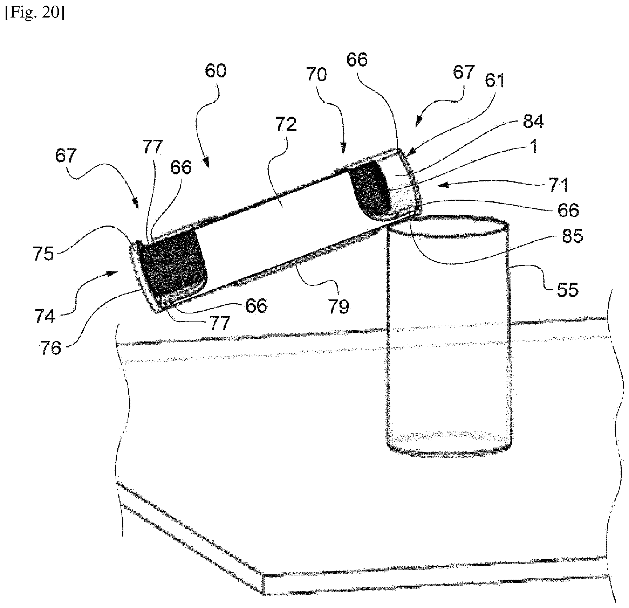

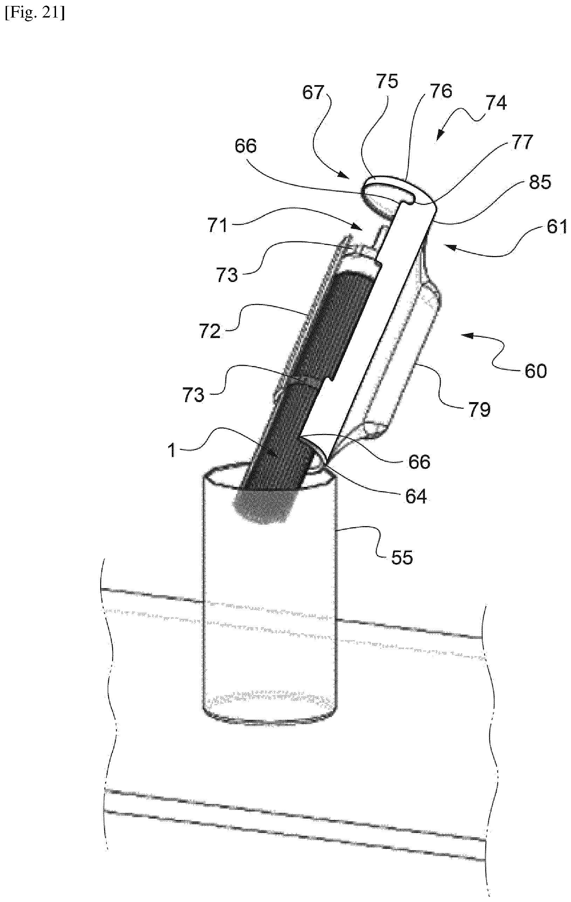

Le dispositif de transfert 60 des paillettes 1 est prévu pour coopérer alors avec le gobelet 55 (figures 20 et 21).

Le gobelet 55 est disposé sur un support horizontal et il présente une section dans laquelle se loge la section du logement 71 du dispositif de transfert 60.

Le dispositif de transfert 60, après avoir été soulevé de la rampe de congélation 4, est approché du gobelet 55, par exemple comme montré sur la figure 20.

On voit que grâce au flasque 74, il n'est pas nécessaire de maintenir le dispositif de transfert 60 dans une position horizontale pour éviter que les paillettes 1 ne s'en échappent, pourvu que le flasque 74 soit dans la position la plus basse, les paillettes 1 ayant une de leurs extrémités qui prend appui contre le fond 76 du flasque 74. Le corps 61, la pelle 72 et les organes anti-retour 73 permettent alors le maintien des paillettes 1 au sein du logement 71.

Le dispositif de transfert 60 est par la suite renversé au-dessus du gobelet 55 avec le côté opposé au fond 74 en bas. Les paillettes 1 glissent alors du logement 71 et tombent à l'intérieur du gobelet 55 (figure 21).

On va maintenant récapituler les actions effectuées par l'utilisateur pour transférer les paillettes de la rampe de congélation 4 au gobelet 55.

Tout d'abord, le dispositif de transfert 60 est disposé sur la rampe de congélation 4 où sont disposées les paillettes 1, dans la première position extrême.

Plus précisément, les patins latéraux 67 sont disposés contre les cornières 19 et le collecteur 70 s'insère entre les parois longitudinales 12, 13 de la rampe 4, en surplomb d'un tronçon transversal 7, 8, la bouche 78 disposées vers les paillettes 1.

L'utilisateur translate ensuite le dispositif de transfert 60 sur la rampe 4 par glissement le long des cornières 19, en saisissant la poignée 79. Les paillettes 1 s'insèrent alors dans le collecteur 70 du dispositif de transfert 60.

En fin de course, lorsque le corps 61 entre en butée contre une paroi transversale 14, 15, la bouche 78 vers cette paroi transversale 14, 15, toutes les paillettes de la rampe 4 ont été transférées dans le dispositif de transfert 60. L'utilisateur soulève par la poignée le dispositif de transfert 60 et le bascule d'un quart de tour de sorte que le flasque de fond 74 soutiennent les paillettes 1.

L'utilisateur retourne le dispositif de transfert 60 au-dessus du gobelet 55 pour transférer les paillettes dans le gobelet 55. Une fois les paillettes dans le gobelet 55, elles peuvent être placées dans un bain d'azote liquide.

Dans l'exemple illustré le dispositif de transfert 60 a coulissé du premier tronçon transversal 8 vers le second tronçon transversal 7 mais l'on peut naturellement procéder en sens inverse, c'est-à-dire du premier tronçon transversal 7 vers le second tronçon transversal 8.

Dans des variantes non illustrées, les formes du dispositif de transfert sont différentes, par exemple les patins sont mis en oeuvre différemment que par les coins 66, par exemple par des doigts.

De nombreuses autres variantes sont possibles en fonction des circonstances et l'on rappelle à cet égard que l'invention ne se limite pas aux exemples décrits et représentés, mais l'invention est définie par les revendications.

## Revendications

1. Ensemble pour manipuler une pluralité de paillettes (1) de conditionnement de semence animale ayant chacune un diamètre prédéterminé et une longueur prédéterminée, comportant une rampe de congélation (4) présentant un rebord et un fond entourant un espace libre central (5), ledit fond comportant deux parois dentées (11, 25) qui s'étendent longitudinalement le long dudit espace central (5), chaque paroi dentée (11, 25) présentant une denture (29) à son sommet comportant une succession de dents (52) et de creux (51), les dentures (29) desdites parois dentées (11, 25) étant identiques avec chaque creux (51) délimité par une surface ayant une courbure selon ledit diamètre prédéterminé ; dans lequel
- dans ladite rampe de congélation (4) ledit fond comporte une paroi de fond (6) en forme de cadre rectangulaire entourant l'espace libre central (5) avec deux tronçons transversaux (7, 8) et deux tronçons longitudinaux (9, 10), avec lesdites parois dentées (11, 25) qui s'étendent transversalement à la paroi de fond (6) en bordant intérieurement lesdits tronçons longitudinaux (9, 10), ledit rebord s'étendant transversalement à la paroi de fond (6) et comportant deux parois longitudinales (12, 13) bordant extérieurement lesdits tronçons longitudinaux (9, 10) de la paroi de fond (6) et deux parois transversales (14, 15) bordant extérieurement lesdits tronçons transversaux (7, 8) de la paroi de fond (6), lesdites parois longitudinales (12, 13) comportant chacune à leur sommet une cornière (19) ;
- ledit ensemble comporte en outre un dispositif de transfert (60) de paillettes (1) comportant deux patins latéraux (67) et un collecteur (70) de paillettes (1) disposé entre les deux patins latéraux (67), ladite rampe de congélation (4) et ledit dispositif de transfert (60) étant configurés pour admettre une première position extrême où ledit dispositif de transfert (60) est disposé avec chaque patin latéral (67) qui prend appui sur une dite cornière (19) tandis que ledit collecteur (70) est en surplomb d'un dit tronçon transversal (7, 8) de ladite paroi de fond (6), pour admettre une seconde position extrême où ledit dispositif de transfert (60) est disposé avec chaque patin latéral (67) qui prend appui sur une dite cornière (19) tandis que ledit collecteur (70) est en surplomb de l'autre dit tronçon transversal (7, 8) de ladite paroi de fond (6), et pour qu'en faisant glisser le dispositif de transfert (60) de la première position extrême à la seconde position extrême avec lesdits patins (67) qui glissent sur lesdites cornières (19), ladite pluralité de paillettes (1) initialement disposée sur ladite rampe (4) est récupérée dans ledit collecteur (70) dudit dispositif de transfert (60).

2. Ensemble selon la revendication 1, **caractérisé en ce que** ledit collecteur (70) délimite un logement (71) débouchant sur toute sa longueur par une bouche (78), laquelle est tournée vers lesdites parois dentées (11, 25) dans ladite première position extrême, ladite rampe de congélation (4) et ledit dispositif de transfert (60) sont configurés pour que quand le dispositif de transfert (60) est disposé avec chaque patin latéral (67) qui prend appui sur une dite cornière (19), la surface formant la limite inférieure de la bouche (78) est à un niveau situé entre lesdits tronçons transversaux (7, 8) de la paroi de fond (6) et le fond du creux (51) des parois dentées (11, 25).

3. Ensemble selon la revendication 2, **caractérisé en ce que** ledit logement (71) est à section ronde.

4. Ensemble selon la revendication 3, **caractérisé en ce que** le dispositif de transfert (60) comporte un corps (61) en forme de gouttière inversée et une pelle incurvée (72) saillant d'une base dudit corps (61), ladite bouche (78) étant située entre une extrémité distale (86) de la pelle (72) et une tranche longitudinale (63) du corps (61).

5. Ensemble selon l'une quelconque des revendications 1 à 4, **caractérisé en ce que** le dispositif de transfert (60) de paillettes comporte un corps (61) en forme de gouttière inversée ayant deux portions d'extrémité (64, 65) situées longitudinalement de part et d'autre dudit collecteur (70), chaque dite portion d'extrémité (64, 65) ayant deux bases (66) en forme de coin (66), chaque dit patin (67) étant formé par lesdites deux bases (66) en forme de coin (66) d'une respective desdites portions d'extrémité (64, 65).

6. Ensemble selon l'une quelconque des revendications 1 à 5, **caractérisé en ce que** chaque cornière (19) comporte une aile (20) s'étendant transversalement aux parois longitudinales (12, 13) et une aile inclinée (21) s'étendant de ladite aile (20) vers l'extérieur et vers le haut de ladite rampe de congélation (4).

7. Ensemble selon l'une quelconque des revendications 1 à 6, **caractérisé en ce que** ledit collecteur (70) délimite un logement (71) débouchant sur toute sa longueur par une bouche (78), laquelle est tournée vers lesdites parois dentées (11, 25) dans ladite première position extrême ; et le dispositif de transfert (60) comporte des organes anti-retour (73) disposés dans ladite bouche (78), configurés pour laisser les paillettes (1) entrer dans le logement (71) au travers de ladite bouche (78) et pour empêcher les paillettes (1) d'en sortir au travers de ladite bouche (78).

8. Ensemble selon la revendication 7, **caractérisé en ce que** lesdits organes anti-retour (73) sont des lamelles configurées pour fléchir afin de laisser les paillettes (1) entrer dans le logement (71) au travers de ladite bouche (78) et pour venir en butée contre une paroi (83) pour empêcher les paillettes (1) d'en sortir au travers de ladite bouche (78).

9. Ensemble selon l'une quelconque des revendications 1 à 8, **caractérisé en ce que** ledit collecteur (70) délimite un logement (71) débouchant sur toute sa longueur par une bouche (78), laquelle est tournée vers lesdites parois dentées (11, 25) dans ladite première position extrême ; le dispositif de transfert (60) comporte un flasque (74) fermant ledit logement (71) à une extrémité dudit dispositif de transfert (60), ledit logement (71) étant ouvert à l'autre extrémité du dispositif de transfert (60).

10. Ensemble selon l'une quelconque des revendications 1 à 9, **caractérisé en ce qu'**il comporte en outre un gobelet de stockage (55) des paillettes (1), ledit collecteur (70) du dispositif de transfert (1) délimitant un logement (71) à section ronde ouvert à une extrémité du dispositif de transfert (60), ledit gobelet (55) ayant une ouverture ayant une section dans laquelle se loge la section dudit logement (71).

## Patentansprüche

1. Anordnung zur Handhabung einer Vielzahl von Tiersamenverpackungspailletten (1), die jeweils einen vorher festgelegten Durchmesser und eine vorher festgelegt Länge haben, aufweisend eine Gefrierplattform (4), die einen Rand und einen Boden aufweist, der einen zentralen freien Platz (5) umgibt, wobei der Boden zwei Zackenwände (11, 25) aufweist, die sich längs entlang des zentralen Platzes (5) erstrecken, wobei jede Zackenwand (11, 25) eine Zahnung (29) an ihrer Spitze aufweist, die eine Abfolge von Zähnen (52) und von Vertiefungen (51) aufweist, wobei die Zahnungen (29) der Zackenwände (11, 25) mit jeder Vertiefung (51) identisch sind, die von einer Oberfläche begrenzt ist, die eine Krümmung gemäß dem vorher festgelegten Durchmesser hat; wobei:
- in der Gefrierplattform (4) der Boden eine Bodenwand (6) in Form eines rechteckigen Rahmens aufweist, der den zentralen freien Platz (5) mit zwei Querabschnitten (7, 8) und zwei Längsabschnitten (9, 10) mit den Zackenwänden (11, 25) umgibt, die sich quer zur Bodenwand (6) erstrecken, indem sie die Längsabschnitte (9, 10) innen säumen, wobei sich der Rand quer zur Bodenwand (6) erstreckt und zwei Längswände (12, 13), die die Längsabschnitte (9, 10) der Bodenwand (6) außen säumen und zwei Querwände (14, 15), die die Querabschnitte (7, 8) der Bodenwand (6) außen säumen, aufweist, wobei die Längswände (12, 13) jeweils an ihrer Spitze ein Winkelstück (19) aufweisen;
- die Anordnung ferner eine Transfervorrichtung (60) der Pailletten (1) aufweist, die zwei seitliche Kufen (67) und einen Sammler (70) der Pailletten (1) aufweist, der zwischen den zwei seitlichen Kufen (67) angeordnet ist, wobei die Gefrierplattform (4) und die Transfervorrichtung (60) dazu ausgelegt sind, eine erste Extremposition zuzulassen, in der die Transfervorrichtung (60) mit jeder seitlichen Kufe (67) angeordnet ist, die sich auf einem Winkelstück (19) abstützt, wohingegen der Sammler (70) über einem Querabschnitt (7, 8) der Bodenwand (6) überhängend ist, um eine zweite Extremposition zuzulassen, in der die Transfervorrichtung (60) mit jeder seitlichen Kufe (67) angeordnet ist, die sich auf einem Winkelstück (19) abstützt, wohingegen der Sammler (70) über dem anderen Querabschnitt (7, 8) der Bodenwand (6) überhängend ist, und damit, indem die Transfervorrichtung (60) aus der ersten Extremposition in die zweite Extremposition auf den Kufen (67) gleitet, die über die Winkelstücke (19) gleiten, die Vielzahl von ursprünglich auf der Plattform (4) angeordneten Pailletten (1) in den Sammler (70) der Transfervorrichtung (60) übernommen wird.

2. Anordnung nach Anspruch 1, **dadurch gekennzeichnet, dass** der Sammler (70) eine Aufnahme (71) begrenzt, die über ihre gesamte Länge durch eine Ausmündung (78) ausmündet, die in der ersten Extremposition zu den Zackenwänden (11, 25) zeigt, wobei die Gefrierplattform (4) und die Transfervorrichtung (60) dazu ausgelegt sind, damit, wenn die Transfervorrichtung (60) mit jeder seitlichen Kufe (67) angeordnet ist, die sich auf einem Winkelstück (19) abstützt, die Oberfläche, die die innere Grenze der Ausmündung (78) bildet, auf einer Ebene ist, die sich zwischen den Querabschnitten (7, 8) der Bodenwand (6) und dem Boden der Vertiefung (51) der Zackenwände (11, 25) befindet.

3. Anordnung nach Anspruch 2, **dadurch gekennzeichnet, dass** die Aufnahme (71) einen runden Querschnitt hat.

4. Anordnung nach Anspruch 3, **dadurch gekennzeichnet, dass** die Transfervorrichtung (60) einen Körper (61) in Form einer umgekehrten Rinne und eine gekrümmte Schaufel (72) aufweist, die aus einer Basis des Körpers (61) hervorragt, wobei sich die Ausmündung (78) zwischen einem distalen Ende (86) der Schaufel (72) und einer Längskante (63) des Körpers (61) befindet.

5. Anordnung nach einem der Ansprüche 1 bis 4, **dadurch gekennzeichnet, dass** die Paillettentransfervorrichtung (60) einen Körper (61) in Form einer umgekehrten Rinne mit zwei Endabschnitten (64, 65) aufweist, die sich längs zu beiden Seiten des Sammlers (70) befinden, wobei jeder Endabschnitt (64, 65) zwei Basen (66) in Form einer Ecke (66) hat, wobei jede Kufe (67) von den zwei Basen (66) in Form einer Ecke (66) eines jeweiligen der Endabschnitte (64, 65) gebildet ist.

6. Anordnung nach einem der Ansprüche 1 bis 5, **dadurch gekennzeichnet, dass** jedes Winkelstück (19) einen Flügel (20) aufweist, der sich quer zu den Längswänden (12, 13) erstreckt und einen geneigten Flügel (21), der sich von dem Flügel (20) nach außen und nach oben in Bezug auf die Gefrierplattform (4) erstreckt.

7. Anordnung nach einem der Ansprüche 1 bis 6, **dadurch gekennzeichnet, dass** der Sammler (70) eine Aufnahme (71) begrenzt, die über ihre gesamte Länge durch eine Ausmündung (78) ausmündet, die in der ersten Extremposition zu den Zackenwänden (11, 25) zeigt; und die Transfervorrichtung (60) Rückkehrverhinderer (73) aufweist, die in der Ausmündung (78) angeordnet sind, die dazu ausgelegt sind, damit die Pailletten (1) durch die Ausmündung (78) in die Aufnahme (71) eintreten können und zu verhindern, dass die Pailletten (1) durch die Ausmündung (78) daraus austreten.

8. Anordnung nach Anspruch 7, **dadurch gekennzeichnet, dass** die Rückkehrverhinderer (73) Lamellen sind, die biegsam ausgelegt sind, um die Pailletten (1) durch die Ausmündung (78) in die Aufnahme (71) eintreten zu lassen und um an eine Wand (83) in Anschlag zu gelangen, um zu verhindern, dass die Pailletten (1) durch die Ausmündung (78) daraus austreten.

9. Anordnung nach einem der Ansprüche 1 bis 8, **dadurch gekennzeichnet, dass** der Sammler (70) eine Aufnahme (71) begrenzt, die über ihre gesamte Länge durch eine Ausmündung (78) ausmündet, die in der ersten Extremposition zu den Zackenwänden (11, 25) zeigt; wobei die Transfervorrichtung (60) einen Flansch (74) aufweist, der die Aufnahme (71) an einem Ende der Transfervorrichtung (60) verschließt, wobei die Aufnahme (71) am anderen Ende der Transfervorrichtung (60) offen ist.

10. Anordnung nach einem der Ansprüche 1 bis 9, **dadurch gekennzeichnet, dass** sie ferner ein Gefäß zum Lagern (55) der Pailletten (1) aufweist, wobei der Sammler (70) der Transfervorrichtung (1) eine an einem Ende der Transfervorrichtung (60) offene Aufnahme (71) mit rundem Querschnitt begrenzt, wobei das Gefäß (55) eine Öffnung mit einem Querschnitt hat, in die sich der Querschnitt der Aufnahme (71) einpasst.

## Claims

1. Assembly for manipulating a plurality of straws (1) for packaging animal semen each having a predetermined diameter and a predetermined length, comprising a freezing rack (4) having a rim and a bottom surrounding a central free space (5), said bottom comprising two toothed walls (11, 25) which extend longitudinally along said central space (5), each toothed wall (11, 25) having a set of toothing (29) at its apex comprising a succession of teeth (52) and hollows (51), the sets of toothing (29) of said toothed walls (11, 25) being identical with each hollow (51) delimited by a surface having a curvature according to said predetermined diameter; wherein
- in said freezing rack (4) said bottom comprises a bottom wall (6) in the form of a rectangular frame surrounding the central free space (5) with two transverse sections (7, 8) and two longitudinal sections (9, 10), said toothed walls (11, 25) extending transversely to the bottom wall (6) and internally bordering said longitudinal sections (9, 10), said rim extending transversely to the bottom wall (6) and comprising two longitudinal walls (12, 13) externally bordering said longitudinal sections (9, 10) of the bottom wall (6) and two transverse walls (14, 15) externally bordering said transverse sections (7, 8) of the bottom wall (6), said longitudinal walls (12, 13) each comprising at their apex a gutter portion (19);
- said assembly further comprises a transfer device (60) for straws (1) comprising two lateral skids (67) and a collector (70) for straws (1) that is disposed between the two lateral skids (67), said freezing rack (4) and said transfer device (60) being configured to have a first extreme position in which said transfer device (60) is disposed with each lateral skid (67) bearing on a said gutter portion (19) while said collector (70) is located over a said transverse section (7, 8) of said bottom wall (6), to have a second extreme position in which said transfer device (60) is disposed with each lateral skid (67) bearing on a said gutter portion (19) while said collector (70) is located over the other said transverse section (7, 8) of said bottom wall (6), and such that by sliding the transfer device (60) from the first extreme position to the second extreme position with said skids (67) sliding on said gutter portions (19), said plurality of straws (1) initially disposed on said rack (4) is collected in said collector (70) of said transfer device (60).

2. Assembly according to claim 1, **characterized in that** said collector (70) delimits an accommodation (71) opening over its entire length by a mouth (78), which mouth is oriented towards said toothed walls (11, 25) in said first extreme position, said freezing rack (4) and said transfer device (60) are configured such that when the transfer device (60) is disposed with each lateral skid (67) bearing on a said gutter portion (19), the surface forming the lower limit of the mouth (78) is at a level located between said transverse sections (7, 8) of the bottom wall (6) and the bottom of the hollow (51) of the toothed walls (11, 25).

3. Assembly according to claim 2, **characterized in that** said accommodation (71) is of round cross-section.

4. Assembly according to claim 3, **characterized in that** the transfer device (60) comprises a body (61) of inverted channel shape and a curved scoop (72) projecting from a base of said body (61), said mouth (78) being located between a distal end (86) of the scoop (72) and a longitudinal edge surface (63) of the body (61).

5. Assembly according to any one of claims 1 to 4, **characterized in that** the transfer device (60) for straws comprises a body (61) of inverted channel shape having two end portions (64, 65) located longitudinally on opposite sides of said collector (70), each said end portion(64, 65) having two bases (66) of wedge shape (66), each said skid (67) being formed by said two bases (66) of wedge shape (66) of a respective one of said end portions (64, 65).

6. Assembly according to any one of claims 1 to 5, **characterized in that** each gutter portion (19) comprises a wing (20) extending transversely to the longitudinal walls (12, 13) and an inclined wing (21) extending from said wing (20) outwardly and towards the top of said freezing rack (4).

7. Assembly according to any one of claims 1 to 6, **characterized in that** said collector (70) delimits an accommodation (71) opening over its whole length by a mouth (78), which mouth is oriented towards said toothed walls (11, 25) in said first extreme position; and the transfer device (60) comprises nonreturn members (73) disposed in said mouth (78), which are configured to let the straws (1) enter the accommodation (71) through said mouth (78) and to prevent the straws (1) from coming out therefrom through said mouth (78).

8. Assembly according to claim 7, **characterized in that** said nonreturn members (73) are blades configured to bend in order to allow the straws (1) to enter the accommodation (71) through said mouth (78) and to come into stopped engagement against a wall (83) to prevent the straws (1) coming out therefrom through said mouth (78).

9. Assembly according to any one of claims 1 to 8, **characterized in that** said collector (70) delimits an accommodation (71) opening over its whole length by a mouth (78), which mouth is oriented towards said toothed walls (11, 25) in said first extreme position; the transfer device (60) comprises a flange (74) closing said accommodation (71) at one end of said transfer device (60), said accommodation (71) being open at the other end of the transfer device (60).

10. Assembly according to any one of claims 1 to 9, **characterized in that** it further comprises a cup (55) for storing the straws (1), said collector (70) of the transfer device (1) delimiting an accommodation (71) of round section open at one end of the transfer device (60), said cup (55) having an opening having a section in which is accommodated the section of said accommodation (71).
